# EUROPÄISCHE PATENTSCHRIFT

(11) **EP 2 300 187 B1**
(45) Veröffentlichungstag und Bekanntmachung des Hinweises auf die Patenterteilung: **08.04.2015**
(21) Anmeldenummer: 09772215.1
(22) Anmeldetag: 04.05.2009
(51) Int. Cl.: B23D 49/16, G02B 27/00

(54) **WERKZEUGMASCHINE, INSBESONDERE HANDGEHALTENE WERKZEUGMASCHINE**
MACHINE TOOL, ESPECIALLY HANDHELD MACHINE TOOL
MACHINE-OUTIL, NOTAMMENT MACHINE-OUTIL À MAIN

(30) Priorität: 02.07.2008 DE 102008040071
(43) Veröffentlichungstag der Anmeldung: 30.03.2011
(73) Patentinhaber: Robert Bosch GmbH, 70442 Stuttgart (DE)
(72) Erfinder: KOEDER, Thilo, 70839 Gerlingen (DE); PLATZER, Joachim, 71686 Remseck-Hochberg (DE)
(86) Internationale Anmeldenummer: PCT/EP2009/055338
(87) Internationale Veröffentlichungsnummer: WO 2010/000515

(56) Entgegenhaltungen:
- EP-A- 0 949 501
- EP-A- 1 471 100
- DE-A1-102006 005 614
- DE-A1-102006 052 808

## Beschreibung

Die Erfindung betrifft eine Werkzeugmaschine, insbesondere eine handgehaltene Werkzeugmaschine, gemäß Oberbegriff des Anspruches 1, basierend auf der DE 10 2006 052 808 A1.

### Stand der Technik

Bei Werkzeugmaschinen, insbesondere handgehaltenen Werkzeugmaschinen, und hier vor allem Stichsägen, ist handhabungs- und/oder bauartbedingt die Sicht des Benutzers auf das werkstückseitig gegebene Arbeitsfeld ihres Arbeitswerkzeuges häufig eingeschränkt. Dies erschwert die Arbeit und kann auch die Arbeitsergebnisse beeinträchtigen. Deswegen wird mit Hilfseinrichtungen gearbeitet, so beispielsweise mit Beleuchtungseinrichtungen, um wenigstens die Sichtverhältnisse im Arbeitsfeld zu verbessern. Ferner auch mit Beobachtungseinrichtungen, die eine indirekte Beobachtung des Arbeitsfeldes ermöglichen sollen.

Aus der DE 10 2006 052 808 A1 ist eine Handhubsäge, insbesondere Scrolling Jigsaw, mit einem Hubsägeblatt bekannt, wobei die Handhubsäge mit Steuerungsmitteln versehen ist, mit denen das Nachführen des Sägeblatts bzw. der Säge entlang von Anrisslinien automatisierbar ist. Ein Sensor in Form einer Kamera, ein Kontrastsensor oder ein Wirbelstromsensor erfasst einzelne Punkte einer vorgezeichneten Linie, interpoliert daraus den tatsächlichen Bahnverlauf und passt den Sägeblattwinkel in Abhängigkeit von der überlagerten Benutzerführung der Säge entsprechend an.

Solche optischen Anordnungen bedingen im Umkreis zum Arbeitsfeld ein auf dieses ausgerichtetes Fenster, und eine entsprechende Anordung dieses Fensters. Im Umkreis zum Arbeitswerkzeug ergeben sich aber auch bei kleiner Fensterfläche durch abspringende Werkstück-, Schmutz- oder Staubpartikel Situationen, sei es durch Beschädigung oder Verschmutzung, die die Sichtverhältnisse im Bereich der Fensterfläche beeinträchtigen.

Aus der EP 0 949 501 A2 ist ein Schutzgehäuse für Beobachtungsgeräte zur Überwachung von staubbelasteten Räumen bekannt. Das Schutzgehäuse ist mit einem Anschluss für Spül- oder Kühlluft versehen. In dem Schutzgehäuse sind in der Umgebung der Ausblicköffnung ein oder mehrere mit dem Innenraum des Schutzgehäuses in Verbindung stehende Austrittskanäle derart angeordnet, dass die Ausblicköffnung von dem zu überwachenden Raum durch einen Schleier aus aus den Austrittskanälen austretender Spülluft getrennt ist.

Die DE 10 2006 005 614 A1 zeigt ferner eine selbstreinigende Oberflächenstruktur für Formgegenstände, wie z.B. einer aus einem Basismaterial bestehenden Glasscheibe oder dergleichen, wobei auf der Oberfläche des Basismaterials Nanopartikel zur Selbstreinigung aufgebracht sind.

### Offenbarung der Erfindung

Der Erfindung liegt die Aufgabe zugrunde, bei Werkzeugmaschinen der eingangs genannten Art eine Beeinträchtigung der Sichtverhältnisse durch solche Gegebenheiten weiter zu reduzieren.

Diese Aufgabe wird erfindungsgemäß mit den Merkmalen des Anspruches 1 gelöst. Die Unteransprüche geben zweckmäßige Weiterbildungen an.

Vorgeschlagen wird eine Werkzeugmaschine, insbesondere handgehaltene Werkzeugmaschine, mit einem Arbeitswerkzeug und einer optischen Anordnung, die ein im Umkreis zum werkstückseitigen Arbeitsfeld des Arbeitswerkzeuges liegendes Fenster aufweist, wobei die optische Anordnung eine Sensorik, insbesondere eine Kamera, aufweist und das Fenster durch eine austrittsseitig der Sensorik vorgelagerte Abdeckung oder die Frontseite der Sensorik, insbesondere das Objektiv einer Kamera, gebildet ist, wobei zum Fenster ein Schutzsystem gegen Verschmutzung und/oder Beschädigung vorgesehen ist, das als mit Spülluft unter Nutzung von Spül-, Stau- und/oder Strömungsund/oder Schwingungseffekten arbeitendes System ausgebildet ist, wobei die Spülluft über einen Lüfter, von dem eine Leitungsverbindung in den Bereich des Fensters führt, von einem Kühlluftstrom für einen Antriebsmotor der Werkzeugmaschine abgezweigt ist. Auf diese Weise ist ein einfaches, effizientes und kostensparendes Reinigungs- und Schutzsystem für die optische Anordnung mit zum überwiegenden Teil bereits in der Werkzeugmaschine intergrierten Komponenten möglich.

Weiter liegt es im Rahmen der Erfindung, ergänzend zu den vorgeschilderten Maßnahmen, das Schutzsystem als auf Basis von Selbstreinigungseffekten arbeitendes System auszugestalten. Insbesondere kommt hierfür die Ausgestaltung von Abdeckungen oder Lichtaustrittsflächen mit selbstreinigenden Oberflächen in Betracht, so die Ausgestaltung mit microstrukturierten Oberflächen, Oberflächen die nur eine geringe Benetzbarkeit aufweisen, sowie auch Oberflächen, die eine entsprechend schmutz- und/oder wasserabweisende Versiegelung aufweisen, so etwa eine Nanoversiegelung.

Solche Versiegelungen können als solche auch einen Schutz des jeweiligen Fensters gegen Beschädigungen bilden und gegebenenfalls im Hinblick auf diesen Schutzzweck um widerstandsfähige Versiegelungsmaterialien ergänzt sein, die die Durchsichtigkeit - ähnlich Klarlacken - nicht beeinträchtigen.

Entsprechende Selbstreinigungseffekte lassen sich auch durch hochfrequente Schwingungen und Rüttelbewegungen erreichen, so beispielsweise durch Anregungen im Ultraschallbereich, so dass der Schmutzabsetzung entgegengewirkt wird. Solche Maßnahmen sind insbesondere auch ergänzend zu entsprechenden Oberflächenstruktierungen, Versiegelungen und dergleichen mit Vorteil einzusetzen.

Ergänzend ist vorgesehen, dass das Schutzsystem als mit einer Ringdüse, mit einer Ummantelung und/oder einer Anblasdüse arbeitendes System ausgebildet ist. Dazu ist es weiterhin vorteilhaft, wenn der abgezweigte Luftanteil über eine zwischengeschaltete Reinigungseinrichtung geleitet ist, und/oder diesem Luftanteil gegebenenfalls auch Reinigungsmittel zugesetzt sind, die ihrerseits, bevorzugt auch durch entsprechende Benetzung, das erneute Anhaften von Schmutz zumindest erschweren.

Als weitere im Rahmen der Erfindung einsetzbare Schutzsysteme kommt auch die Abdeckung des Fensters mit Folien, insbesondere abziehbaren Folien in Frage, so dass entsprechend einem aufgetretenen Schmutzungsgrad jeweils wiederum durch Folientausch eine Verbesserung der Sichtverhältnisse erreicht werden kann.

Die Erfindung ist insbesondere in Verbindung mit Werkzeugmaschinen von Bedeutung, die eine halbautonome Verfolgung einer jeweiligen Arbeitslinie durch das Arbeitswerkzeug der Werkzeugmaschine im Arbeitsbetrieb ermöglichen, hierfür aber eine genaue Erfassung der Arbeitslinie bedingen, da bei der angesprochenen halbautonomen Arbeitsweise der Benutzer lediglich die Abstützung, nicht aber die Führung der Maschine übernimmt. Für diesen halbautonomen Betrieb wird die Arbeitslinie über eine Sensorik, bevorzugt eine Kamera, erfasst, und es werden weiter die erfassten Kenndaten der Arbeitslinie über eine Signalverarbeitungseinheit einer Steuerund Stelleinheit zugeleitet, über die das Arbeitswerkzeug der Werkzeugmaschine, im Falle der Stichsäge also das Sägeblatt in der Arbeitslinie ausgerichtet geführt wird.

Weitere Einzelheiten und Merkmale der Erfindung ergeben sich aus den Ansprüchen, der Beschreibung und den Zeichnungen. Letztere zeigen:
- Fig. 1: schematisiert in perspektivischer Seitenansicht eine Stichsäge als Beispiel einer handgehaltenen Werkzeugmaschine, die mit einer optischen Anordnung versehen ist, die ein der werkstückseitigen Arbeitsfläche des Arbeitswerkzeuges zugewandtes Fenster aufweist und in mehreren Betriebsarten zu betreiben ist,
- Fig. 2: eine weiter vereinfachte und schematisierte Seitenansicht einer im Grundaufbau entsprechenden Stichsäge mit Veranschaulichtung des dem Fenster zugeordneten Schutzsystems,
- Fig. 3 bis 10: Verschiedene Varianten für Ausgestaltungen eines dem Fenster zugeordneten Schutzsystems, und
- Fig. 11: eine weitere Konstruktionsvariante einer Stichsäge im Ausschnitt mit dem Fenster zugeordnetem, eine Abdeckung umfassenden Schutzsystem.

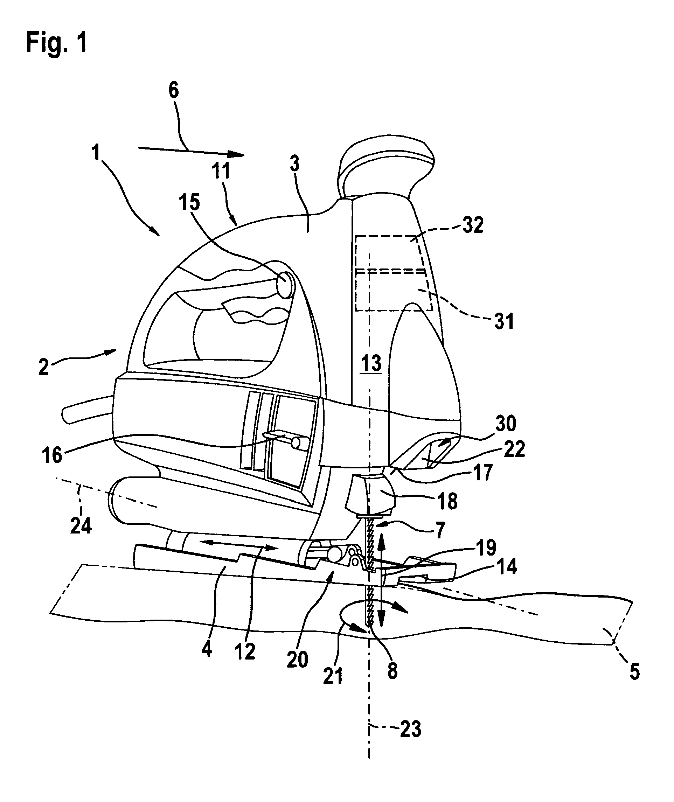

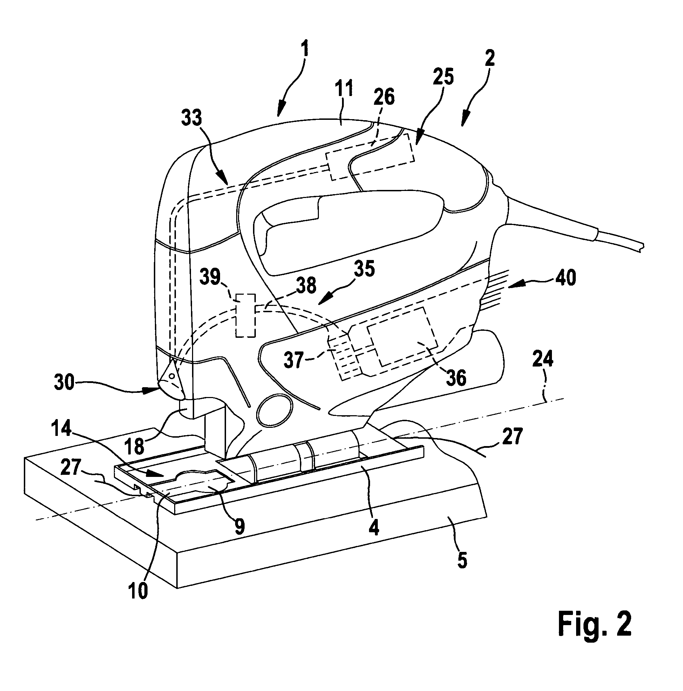

Fig. 1 zeigt als Beispiel einer Werkzeugmaschine 1 eine Stichsäge 2, die über eine Fußplatte 4 auf einem Werkstück 5 abgestützt ist. Im bezogen auf die Arbeitsrichtung 6 vorderen Bereich der Stichsäge 2, deren Gehäuse mit 3 bezeichnet ist, weist diese ein in Richtung des Pfeiles 19 hubbeweglich angetriebenes Sägeblatt 8 als Arbeitswerkzeug 7 auf. Der zugehörige Hubantrieb ist im darüber liegenden Bereich des Gehäuses 3 angeordnet, dessen Stirnwand 13 in Richtung auf die Sägeblattaufnahme 18 in einer Stufe 17 ausläuft, die überdeckend zum Sägeblatt 8 und zur Sägeblattaufnahme 18 liegt und in deren Übergang zur Stirnwand 13 das Fenster 30 einer in Fig. 2 als Beispiel veranschaulichten optischen Anordnung 33 liegt. Das Fenster 30 liegt in Beobachtungsrichtung dem werkstückseitigen Arbeitsfeld 9 des Sägeblattes 8 gegenüber, zu dem seitens der Fußplatte 4 eine Aussparung 14 korrespondiert, die vom Sägeblatt 8 durchsetzt ist. Die optische Anordnung 33 kann auch eine Beleuchtungsanordnung 22 umfassen, und es kann eine solche in entsprechender Weise auch ein Fenster 30 aufweisen. Dies ist in Fig. 1 angedeutet.

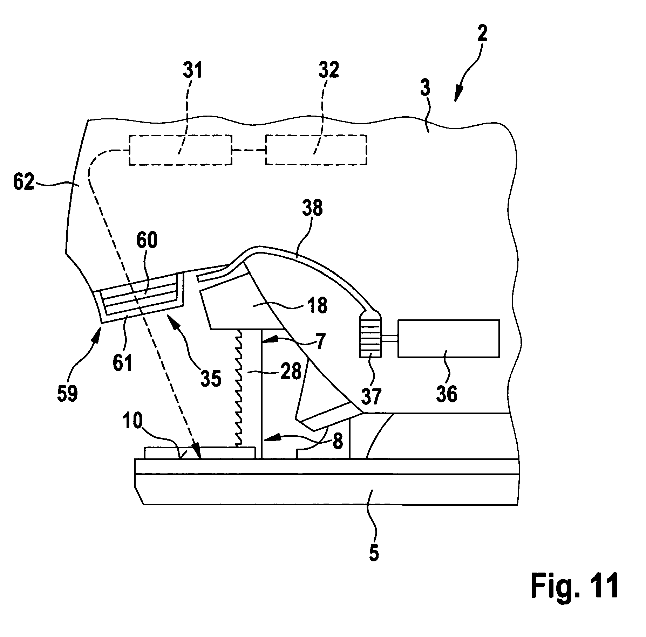

Fig. 1 veranschaulicht weiter das Sägeblatt 8 in einer seiner Geradeaus-Arbeitsrichtung entsprechenden Ausrichtung, die dem Regelarbeitsbetrieb der Stichsäge 2 entspricht. In diesem erstrecken sich (siehe Fig. 11) die Flachseiten 28 des Sägeblattes 8 in Richtung der Längsachse 24 der Stichsäge 2. Die Stichsäge 2 ist darüber hinaus in weiteren Betriebsarten zu betreiben, deren eine der sogenannte Pendelhubbetrieb ist, bei dem das Sägeblatt 8 zum Hubantrieb (Pfeil 19) überlagert in Pendelrichtung (Pfeil 12) über den Stellantrieb 20 angetrieben ist. Eine weitere, dritte Betriebsart ist durch den Pfeil 21 angedeutet, gemäß dem das Sägeblatt 8 aus seiner der Geradeaus-Arbeitsrichtung entsprechenden Erstreckung um seine Drehachse 23 in zur Längsachse 24 winklige Drehstellungen zu verstellen ist. Diese dritte Betriebsart stellt den sogenannten Scrolling-Modus dar, in dem das Sägeblatt 8 durch Verstellung um seine Drehachse 23 auf eine vom Verlauf der Längsachse 24 abweichende Arbeitslinie 27, die in Fig. 2 angedeutet ist, ausgerichtet wird und dieser Arbeitslinie 27 folgt.

Es ist somit entsprechend der Drehstellung des Sägeblattes 8 eine von der Längsausrichtung (Längsachse 24) der Stichsäge 2 abweichende Arbeitsrichtung zu erreichen. Im Scrolling-Modus wird bei sensorischer Erfassung einer jeweiligen Arbeitslinie 27 deren Verlauf rechnergestützt in Stellbefehle für eine Aktuatorik umgesetzt, über die das Sägeblatt 8 auf die jeweilige, dem Verlauf der Arbeitslinie 27 entsprechende Drehstellung eingestellt wird. Entsprechend dieser automatisierten Verfolgung der jeweiligen Arbeitslinie 27 durch Veränderung der Drehstellung des Sägeblattes 8 ergibt sich ein halbautonomer Arbeitsbetrieb, bei dem der die Stichsäge 2 haltende Benutzer im Wesentlichen nur den Vorschub der Stichsäge 2 zu übernehmen und die Stichsäge 2 - grob ausgerichtet - in Richtung der jeweiligen Arbeitslinie 27 abzustützen hat. Die unmittelbare Verfolgung der Arbeitslinie 27 erfolgt aber durch die maschinelle Ausrichtung des aufgrund seiner flachen Form querführenden Sägeblattes 8 auf die Arbeitslinie 27 und entlang der Arbeitslinie 27.

Die Einstellung der Stichsäge 2 auf die verschiedenen Betriebsarten erfolgt über eine Schalteinrichtung 16. Des Weiteren ist bei 15 eine Schaltungsanordnung angedeutet, über die die Stichsäge 2 ein- und auszuschalten ist. Die für den halbautonomen Betrieb der Stichsäge 2 erforderliche Beobachtungseinrichtung mit der zugehörigen optischen Anordnung 33 arbeitet, wie auch in Fig. 1 angedeutet, mit einer Recheneinheit 31 sowie einer Steuer- und Stelleinheit 32 zusammen. Die Stelleinheit 32 greift über eine entsprechende Aktuatorik auf das Sägeblatt 8 zur Einstellung der jeweils geforderten Drehwinkelstellung zu.

Die exakte Verfolgung der Arbeitslinie 27 durch das Sägeblatt 8 erfordert neben den bereits angesprochenen maschinenseitigen Voraussetzungen auch eine genaue Erfassung der jeweiligen Arbeitslinie 27. Dies bedingt ausgehend vom Fenster 30 eine ungetrübte Sicht auf eine zum Arbeitsfeld 9 benachbarte, durch die Aussparng 14 umgrenzte und in Fig. 2 angedeutete Detektionsfläche 10, durch die die Arbeitslinie 27 jeweils verläuft.

In Fig. 2 ist, ähnlich wie in Fig. 1, das Fenster 30 als solches wie auch in seiner Lage zur Detektionsfläche 10 nur angedeutet. Dies gilt auch für die strichpunktierte Darstellung der optischen Anordnung 33, die von der als Kamera 26 ausgebildeten Sensorik 25 ausgeht, welche im Griffteil 11 der Stichsäge 2 beispielsweise angeordnet ist. Auf das Fenster 30 auslaufend ist in Fig. 2 weiter eine erste Ausgestaltungsform eines Schutzsystemes 35 strichliert veranschaulicht, das zur Vermeidung der Verschmutzung des Fensters 30 dient, wobei das Schutzsystem 35 luftgestützt mit Spülluft arbeitet, die vom Kühlluftstrom für den Antriebsmotor 36 abgezweigt ist. Gefördert wird die Kühlluft über einen angedeuteten Lüfter 37, von dem eine Leitungsverbindung 38 in den Bereich des Fensters 30 führt, dessen Verschmutzung durch die Spülluft verhindert werden soll. Dementsprechend erweist es sich als zweckmäßig, wenn in die Leitungsverbindung 38 eine Reinigungs- und/oder Abscheidevorrichtung 39 integriert ist, die in der Spülluft enthaltende Verunreinigungen abtrennt, da die Spülluft, in der Umgebung zur Stichsäge 2 entnommen, entsprechend den Arbeitsbedingungen im Regelfall zumindest staubbelastet ist. Die Luftansaugung auf den Lüfter 37 ist angedeutet durch im Gehäuse 3 vorgesehene Luftöffnungen 40.

Fig. 2 veranschaulicht im Groben eine erfindungsgemäße Möglichkeit, Schmutzanlagerungen am Fenster 30 durch An- oder Abblasen, insbesondere auch an- und abschwellendes und/oder stoßartiges An- oder Abblasen des Fensters 30 mit Spülluft zumindest zu reduzieren, wobei das Fenster 30 als fensterartige Abdeckung für eine nachgeordnete Sensorik, Optik oder dergleichen, und damit auch als Schutzabdeckung dienen kann. Das Fenster 30 kann aber auch durch die Austrittsseite 41 dieser Optik oder Sensorik, so beispielsweise durch ein Objektiv oder ein Linsensystem gebildet sein.

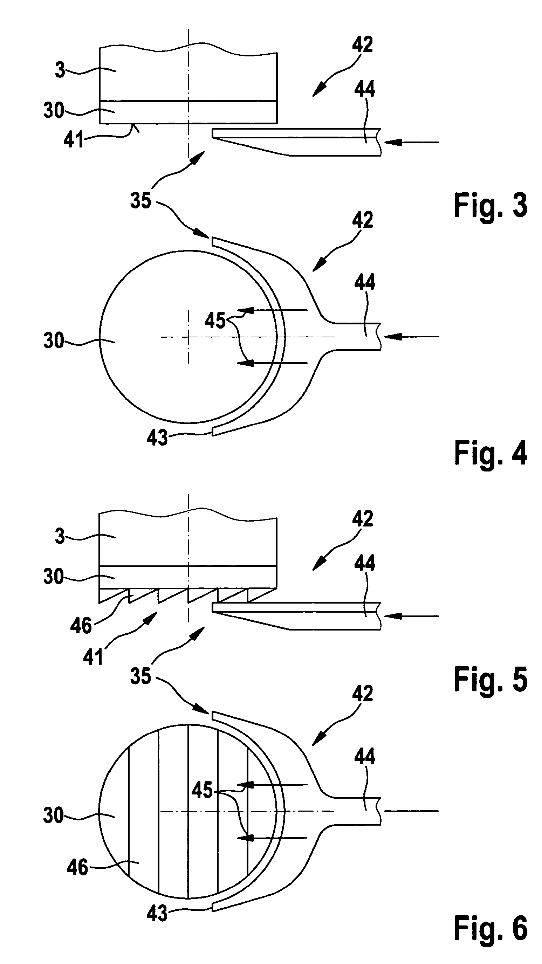

Die Fig. 3 bis 10 veranschaulichen teils konstruktive Ausgestaltungen einer solchen Lösung, teils ergänzende oder auch selbstständig als Schutzsysteme einzusetzende Lösungen.

So ist in Fig. 3 und 4 gezeigt, dass das Fenster 30, dargestellt als in das Gehäuse 3 eingesetzt, an seiner der Verschmutzung ausgesetzten, dem Arbeitsfeld 9 zugewandten Außenseite 41 bevorzugt etwa tangential angeblasen wird, und zwar über eine Anblasdüse 42, die als Flachdüse ausgestaltet ist und sich etwa halbkreisförmig zum im Beispiel kreisförmigen Fenster 30 erstreckt. Der Austrittsquerschnitt 43 der Düse 42 ist als Blasspalt ausgebildet, der durch die Bemessung seines Querschnitts und/oder die Bemessung und/oder Ausgestaltung des rückwärtigen, an einen Spülluftanschluss 44 angeschlossenen Teiles der Düse 42 dahingehend mit Spülluft versorgt ist, dass sich über die Fläche des Fensters 30 eine möglichst gleichmäßige, gebündelte Luftströmung ergibt.

Fig. 5 und 6 gehen von der gleichen Grundkonfiguration für eine Düse 42 aus, so dass diesbezüglich auf die Ausführungen zu Fig. 3 und 4 verwiesen werden kann. Fig. 5 und 6 zeigen darüber hinaus eine Strukturierung der angeblasenen Außenseite 41 des Fensters 30, symbolisch dargestellt durch quer zur Blasrichtung 45 verlaufende, sägezahnartige und in Blasrichtung ansteigende Rippen 46. Die Rippen 46 können auch aufgelöst in einzelne Rippenabschnitte und/oder bezüglich der einzelnen Rippenabschnitte versetzt zueinander liegende Führungskörper gebildet sein, jeweils mit dem Ziel, in Verbindung mit der gezielten Anblasung in Blasrichtung 45 eine Verwirbelung der über die Außenseite 41 strömenden Spülluft zu erreichen, die ein Ansetzen von Verschmutzungspartikeln an der Außenseite 41 verhindert.

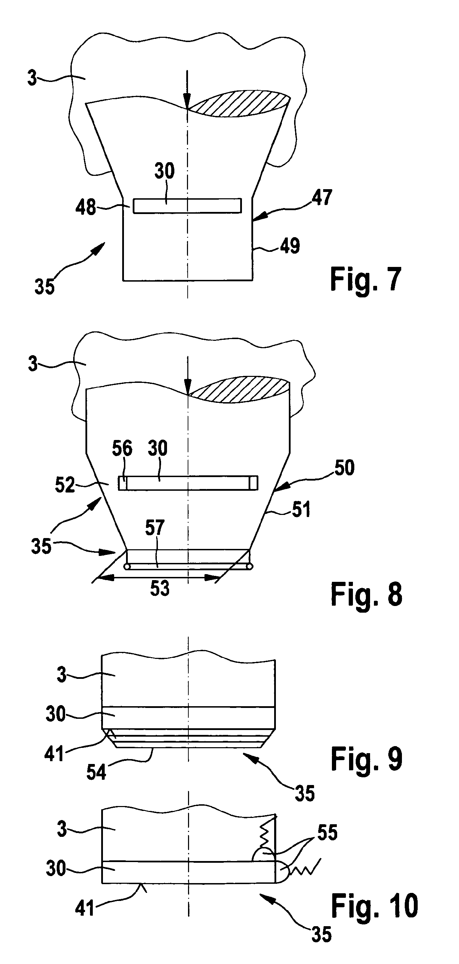

Fig. 7 und 8 veranschaulichen Lösungen, bei denen das Fenster 30 von einer mit Spülluft angeströmten Ringdüse 47 umschlossen ist, und zwar mit Abstand umschlossen ist, so dass die Spülluft durch einen Ringspalt 48 zwischen Düse 47 und Fenster 30 strömt und sich in Ausströmrichtung vor dem Fenster 30 quasi eine in Strömungsausrichtung bewegte Luftsäule aus gereinigter Spülluft aufbaut, die einer Anlagerung von Schmutzpartikeln an der Außenseite 41 des Fensters 30 entgegenwirkt. Zweckmäßig ist es hierzu, dass die Düse 47 mit ihrem Mantel 49 über das Fenster 30 in Abströmrichtung hinausragt und so eine schützende Abschirmung bildet, die den Aufbau eines entsprechenden strömenden Luftpolsters begünstigt.

Während in Fig. 7 der Mantel 49 ausgehend vom Ringspalt 48 nahezu zylindrisch zum Fenster 30 verläuft, zeigt Fig. 8 eine Variante, bei der die Düse 50 einen Mantel 51 aufweist, der sich im Überdeckungsbereich zum Fenster 30, zumindest aber im in Ausströmrichtung an das Fenster 30 anschließenden Bereich in Ausströmrichtung verjüngt, somit bezogen auf die Arbeitsfläche als Ausgangspunkt einen umgekehrten Trichter bildet. Die trichterförmige Verjüngung ist im Ausführungsbeispiel so gewählt, dass sich ein im Querschnitt verhältnismäßig breiter Ringspalt 52 ergibt, und dass der Austrittsquerschnitt 53 der Düse 50 etwa dem Durchmesser des Fensters 30 entspricht. Ist das Fenster 30 beispielsweise als Objektiv ausgebildet, das eine optische Strahlbündelung in Richtung auf die Arbeitsfläche 9 zur Folge hat, so lässt sich der Austrittsquerschnitt entsprechend der Bündelung und entsprechend dem axialen Überstand zum Fenster 30 weiter verengen, was, im Vergleich zur Ausgestaltung gemäß Fig. 7, nicht nur den Eintrittsquerschnitt für etwaige Schmutzpartikel und sonstige Partikel, die zur Beschädigung des Fensters 30 führen könnten, verengt, sondern auch zu einer Beschleunigung der Luftströmung in Ausströmrichtung beiträgt, so dass sich ein weiter verbesserter Verschmutzungsschutz ergibt.

Fig. 9 zeigt eine Ausgestaltung, bei der auf das Fenster 30 an der Außenseite 41 zumindest eine, bevorzugt ein Stapel von Abreißfolien 54 aufgebracht ist, die bei entsprechender Verschmutzung abgezogen werden können. Ein solcher Verschmutzungs- und Beschädigungsschutz ist beispielsweise auch in Verbindung mit Lösungen gemäß Fig. 7 und 8 einzusetzen.

In erweitertem Umfang gilt dies auch für die in Fig. 10 veranschaulichte Ausgestaltung des Schutzsystems, derart, dass das Fenster 30 zu Schwingungen, insbesondere zu Schwingungen im Ultraschallbereich, angeregt wird, was durch am Fenster 30 angesetzte Schwingungserreger 55 erreicht werden kann. Vor allem in Verbindung mit Ausgestaltungen gemäß Fig. 3 bis 6 erweist sich eine solche Ausgestaltung zusätzlich als hilfreich.

Ebenso wie bei Reinigungs- und Abscheidevorrichtungen 39 durch Ionisierung eine Staubabscheidung erreicht werden kann, können solche Effekte auch im Zusammenhang mit der Schmutzfreihaltung des Fensters 30 genutzt werden, beispielsweise dadurch, dass im Austrittsbereich der Düse 47 bzw. 50 gemäß Fig. 7 und 8 ein elektrisches Feld aufgebaut wird, durch das bei gleichpoliger Aufladung beispielsweise einer Umrahmung 56 zum Fenster 30 und eines Leiterringes 57 ausgangsseitig zur Düse 50 Staub- und Schmutzpartikel vom Fenster 30 ferngehalten werden.

Ferner liegt es im Rahmen der Erfindung, was in den Zeichnungen nicht gezeigt ist, die Außenseite 41 des Fensters 43 jeweils in der Oberflächenstruktur und/oder durch Beschichtung so auszugestalten, dass sich keine Schmutzanhaftung ergibt oder diese zumindest sehr erschwert wird, beispielsweise unter Nutzung des bekannten Lotuseffektes.

Fig. 11 zeigt in Anlehnung an eine im Grundaufbau der Fig. 1 entsprechende Stichsäge 2 eine optische Anordnung 59, bei der das Fenster 30 durch eine als Kamera ausgebildete Zeilensensorik 60 und eine dieser zugeordnete Abdeckung 61 gebildet ist, wobei die Abdeckung 61 zum Sensor 60 einen abgeschlossenen, gegebenenfalls luftdicht abgeschlossenen Raum begrenzt oder begrenzen kann, so dass der Zeilensensor 60 gegen Verschmutzungen und Beschädigungen geschützt ist und der Verschmutzung der Abdeckung mit all jenen Maßnahmen entgegengewirkt werden kann, die anhand der vorstehenden Ausführungsbeispiele erläutert wurde. Gegebenenfalls kann der durch die Abdeckung 61 gegenüber dem Sensor 60 abgegrenzte Raum auch unter Überdruck gesetzt werden, um das Eindringen verunreinigter Luft zu verhindern. Hierzu kann die Zufuhr gereinigter Druckluft vorgesehen sein, beispielsweise durch einen Anschluss zum Lüfter 37 und es können zum Beispiel in der Abdeckung 61 drosselnde Abströmöffnungen vorgesehen sein. Auch können die Begrenzungen zum Raum, so insbesondere die Abdeckung und/oder der Sensor 60 schmutzabweisend ausgebildet und/oder beschichtet werden, um bei Druckbeaufschlagung des Raumes die Anlagerung von Restschmutz zu vermeiden.

Fig. 11 veranschaulicht, dass so auch empfindliche Sensoriken in exponierter Stellung zum Arbeitswerkzeug 7, hier gebildet durch das Sägeblatt 8, angeordnet werden können, zumal eine exponierte Lage, wie sie in Fig. 11 gezeigt ist, eine besonders günstige Beobachtungsposition für die Detektionsfläche 10, gegebenenfalls auch die Arbeitsfläche 9 in ihrer Gesamtheit mit sich bringt. Angeordnet ist in Fig. 11 das Fenster 30 mit der Zeilensensorik 60 und der Abdeckung 61 an einem vorderen, nasenartigen Vorsprung des Gehäuses 3 der Stichsäge 2, gegenüber dem nasenartigen Vorsprung 62 unterseitig in Richtung auf das Arbeitsfeld 9 vorspringend, so dass sich auch für eine Luftumspülung beste Voraussetzungen ergeben. Eine solche Zeilensensorik 60, die insbesondere auch eine präzise hochaufgelöste Darstellung der Detektionsfläche 10 und der Arbeitslinie 27 ermöglicht, ist insbesondere bei Stichsägen 2 sinnvoll, die wie anhand der Fig. 1 erläutert, insbesondere auch im halbautonomen Betrieb einzusetzen sind und deshalb zuverlässig eine genaue Beobachtung von Detektionsfläche 10 und Arbeitslinie 27 allein über die Optik bedingen.

## Patentansprüche

1. Werkzeugmaschine, insbesondere handgehaltene Werkzeugmaschine (1), mit einem Arbeitswerkzeug und einer optischen Anordnung (35; 59), die ein im Umkreis zum werkstückseitigen Arbeitsfeld (9) des Arbeitswerkzeuges (7) liegendes Fenster (30) aufweist, wobei die optische Anordnung (59) eine Sensorik (25), insbesondere eine Kamera (26), aufweist und das Fenster (30) durch eine austrittsseitig der Sensorik (25) vorgelagerte Abdeckung (61) oder die Frontseite der Sensorik (25), insbesondere das Objektiv einer Kamera, gebildet ist, wobei zum Fenster (30) ein Schutzsystem (35) gegen Verschmutzung und/oder Beschädigung vorgesehen ist, **dadurch gekennzeichnet, dass** das Schutzsystem (35) als mit Spühlluft unter Nutzung von Spül-, Stau- und/oder Strömungs- und/oder Schwingungseffekten arbeitendes System ausgebildet ist, wobei die Spülluft über einen Lüfter (37), von dem eine Leitungsverbindung (38) in den Bereich des Fensters (30) führt, von einem Kühlluftstrom für einen Antriebsmotor (36) der Werkzeugmaschine abgezweigt ist.

2. Werkzeugmaschine nach Anspruch 1, **dadurch gekennzeichnet, dass** das Schutzsystem (35) als auf Basis von Selbstreinigungseffekten arbeitendes System ausgebildet ist.

3. Werkzeugmaschine nach Anspruch 2, **dadurch gekennzeichnet, dass** zur Selbstreinigung eine selbstreinigende Oberflächenstruktur der Außenseite (41) des Fensters (30), eine Beschichtung der Außenfläche (41) des Fensters und/oder eine Schwingungsanregung für das Fenster (30) oder zumindest dessen Außenseite vorgesehen ist.

4. Werkzeugmaschine nach Anspruch 1, **dadurch gekennzeichnet, dass** das Schutzsystem (35) als mit einer Ringdüse (47), mit einer Ummantelung und/oder einer Anblasdüse (42) arbeitendes System ausgebildet ist.

5. Werkzeugmaschine nach Anspruch 1 oder 4, **dadurch gekennzeichnet, dass** das Schutzsystem (35) eine Reinigungs- und/oder Abscheidevorrichtungen (39) für die Spülluft aufweist.

6. Werkzeugmaschine nach einem der Ansprüche 1, 4 oder 5, **dadurch gekennzeichnet, dass** eine Vorrichtung, insbesondere die Reinigungs- und/oder Abscheidevorrichtung (39) zur Beimengung von Reinigungszusätzen zur Spülluft vorgesehen bzw. ausgebildet ist.

7. Werkzeugmaschine nach Anspruch 5 oder 6, **dadurch gekennzeichnet, dass** als Reinigungs- und/oder Abscheidevorrichtung (39) Filterkörper, ZyklonAbscheider und/oder Elektrofilter vorgesehen sind.

8. Werkzeugmaschine nach einem der vorhergehenden Ansprüche, **dadurch gekennzeichnet, dass** das Schutzsystem (35) durch eine zum Fenster (30) vorgelagerte, insbesondere auswechselbare Abdeckung gebildet ist.

9. Werkzeugmaschine nach Anspruch 8, **dadurch gekennzeichnet, dass** die Abdeckung durch eine aufgebrachte Beschichtung gebildet ist.

10. Werkzeugmaschine nach Anspruch 8, **dadurch gekennzeichnet, dass** die Abdeckung durch eine aufgezogene, insbesondere abziehbare Folie (54) gebildet ist.

11. Werkzeugmaschine nach einem der vorhergehenden Ansprüche, **dadurch gekennzeichnet, dass** nachgeordnet zu der der optischen Anordnung (33; 59) zugehörigen Sensorik eine Recheneinheit (31) für die von der Sensorik erfassten Kenndaten einer als Arbeitswegvorgabe dienenden Arbeitslinie (27) und eine die Kenndaten verarbeitende Steuer- und Stelleinheit (32) vorgesehen sind, über die die Werkzeugmaschine (1) mit ihrem Arbeitswerkzeug (7), insbesondere die als Stichsäge (2) ausgebildete Werkzeugmaschine (1) mit ihrem Sägeblatt (8) in ihre Arbeitsrichtung einstellbar ist, derart, dass die Sägerichtung des Sägeblattes (8) mit der Arbeitslinie (27) zusammenfällt.

## Claims

1. Machine tool, in particular handheld machine tool (1), having a working tool and having an optical arrangement (35; 59), which has a window (30) which is located in the vicinity of the workpiece-side working area (9) of the working tool (7), wherein the optical arrangement (59) has a sensor system (25), in particular a camera (26), and the window (30) is formed by a cover (61), which is located in front of the sensor system (25) on the outlet side, or the front face of the sensor system (25), in particular the objective of a camera, a protection system (35) is provided for the window (30), against dirt and/or damage, **characterized in that**
the protection system (35) is in the form of a system which operates with purging air, using purging, dam and/or flow and/or oscillation effects, wherein the purging air is tapped off from a cooling air flow for a drive motor (36) of the machine tool via a fan (37) from which a line connection (38) leads into the area of the window (30).

2. Machine tool according to Claim 1,
**characterized in that**
the protection system (35) is in the form of a system which operates on the basis of self-cleaning effects.

3. Machine tool according to Claim 2,
**characterized in that**,
for self cleaning, a self-cleaning surface structure is provided on the outer face (41) of the window (30), a coating is provided on the outer surface (41) of the window, and/or oscillation excitation is provided for the window (30) or at least its outer face.

4. Machine tool according to Claim 1,
**characterized in that**
the protection system (35) is in the form of a system which operates with an annular nozzle (47), a sheath and/or a blowing nozzle (42).

5. Machine tool according to Claim 1 or 4,
**characterized in that**
the protection system (35) has a cleaning and/or separation apparatuses (39) for the purging air.

6. Machine tool according to one of Claims 1, 4 or 5,
**characterized in that**
an apparatus, in particular the cleaning and/or separation apparatus (39), is provided and/or designed to add cleaning additives to the purging air.

7. Machine tool according to Claim 5 or 6,
**characterized in that**
filter bodies, cyclone separators and/or electrical filters are provided as the cleaning and/or separation apparatus (39).

8. Machine tool according to one of the preceding claims,
**characterized in that**
the protection system (35) is formed by a cover which is located in front of the window (30) and, in particular, is replaceable.

9. Machine tool according to Claim 8,
**characterized in that**
the cover is formed by an applied coating.

10. Machine tool according to Claim 8,
**characterized in that**
the cover is formed by a film (54) which is pulled on, and in particular can be pulled off.

11. Machine tool according to one of the preceding claims,
**characterized in that**
a computation unit (31) for the characteristic data, recorded by the sensor system, of a working line (27), which is used as a working path preset, and a control and actuating unit (32), which processes the characteristic data, are provided downstream from the sensor system which is associated with the optical arrangement (33; 59), by means of which computation unit (31) the machine tool (1), together with its working tool (7), in particular the machine tool (1) in the form of a jigsaw (2) with its saw blade (8) can be adjusted in its working direction such that the sawing direction of the saw blade (8) coincides with the working line (27).

## Revendications

1. Machine-outil, notamment machine-outil à main (1), avec un outil de travail et un agencement optique (35 ; 59) comportant une fenêtre (30) reposant dans le pourtour du champ de travail (9), situé du côté pièce usinée, de l'outil de travail (7), l'agencement optique (59) comportant un système d'analyse sensorielle (25), notamment une caméra (26), et la fenêtre (30) étant formée par un cache (61) disposé en amont du côté de sortie du système d'analyse sensorielle (25) ou du côté avant du système d'analyse sensorielle (25), notamment l'objectif d'une caméra, un système de protection (35) de la fenêtre (30) permettant d'agir contre l'encrassement et/ou l'endommagement étant prévu, **caractérisée en ce que** le système de protection (35) prend la forme d'un système fonctionnant avec de l'air de lavage utilisant des effets d'écoulement et/ou d'oscillation, de nettoyage et/ou d'accumulation, l'air de lavage étant dévié d'un flux d'air de refroidissement prévu pour un moteur d'entraînement (36) de la machine-outil via un ventilateur (37) d'où une liaison de conduite (38) mène dans la zone de la fenêtre (30).

2. Machine-outil selon la revendication 1, **caractérisée en ce que** le système de protection (35) prend la forme d'un système fonctionnant sur la base des effets autonettoyants.

3. Machine-outil selon la revendication 2, **caractérisée en ce que** pour réaliser l'autonettoyage, on prévoit une structure de surface autonettoyante du côté extérieur (41) de la fenêtre (30), un revêtement de la surface extérieure (41) de la fenêtre et/ou une excitation par vibration de la fenêtre (30) ou au moins de son côté extérieur.

4. Machine-outil selon la revendication 1, **caractérisée en ce que** le système de protection (35) prend la forme d'un système fonctionnant avec une buse annulaire (47), une enveloppe et/ou une buse de soufflage (42).

5. Machine-outil selon la revendication 1 ou 4, **caractérisée en ce que** le système de protection (35) comporte des dispositifs de nettoyage et/ou de séparation (39) pour l'air de lavage.

6. Machine-outil selon l'une quelconque des revendications 1, 4 ou 5, **caractérisée en ce qu'**un dispositif, notamment le dispositif de nettoyage et/ou de séparation (39) est prévu et/ou réalisé pour rassembler les surplus de nettoyage de l'air de lavage.

7. Machine-outil selon la revendication 5 ou 6, **caractérisée en ce que** le dispositif de nettoyage et/ou de séparation (39) prévu prend la forme d'un corps de filtre, d'un séparateur cyclonique et/ou d'un électrofiltre.

8. Machine-outil selon l'une quelconque des revendications précédentes, **caractérisée en ce que** le système de protection (35) est formé par un cache disposé avant la fenêtre (30), notamment amovible.

9. Machine-outil selon la revendication 8, **caractérisée en ce que** le cache est formé par un revêtement appliqué dessus.

10. Machine-outil selon la revendication 8, **caractérisée en ce que** le cache est formé par un film (54) pour être tiré, notamment retiré.

11. Machine-outil selon l'une quelconque des revendications précédentes, **caractérisée en ce qu'**une unité de calcul (31) pour les données caractéristiques détectées par le système d'analyse sensorielle d'une ligne de travail (27) servant d'objectif de trajectoire de travail et une unité de commande et de réglage (32) traitant les données caractéristiques sont prévues en aval du système d'analyse sensorielle associé à l'agencement optique (33 ; 59), via lesquelles la machine-outil (1) avec son outil de travail (7), notamment la machine-outil (1) réalisée sous la forme d'une scie sauteuse (2) avec sa lame de scie (8), est réglable dans sa direction de travail, de telle sorte que la direction de scie de la lame de scie (8) coïncide avec la ligne de travail (27).
